# EUROPÄISCHE PATENTSCHRIFT

(11) **EP 0 766 888 B1**
(45) Veröffentlichungstag und Bekanntmachung des Hinweises auf die Patenterteilung: **23.08.2000**
(21) Anmeldenummer: 95922406.4
(22) Anmeldetag: 21.06.1995
(51) Int. Cl.: H04B 7/08

(54) **ANTENNA DIVERSITY-FUNKEMPFANGSANORDNUNG FÜR TELEKOMMUNIKATIONSSYSTEME MIT EINER BLOCKORIENTIERTEN ÜBERTRAGUNG VON FUNKNACHRICHTEN**
AERIAL DIVERSITY RADIO RECEIVING ARRANGEMENT FOR TELECOMMUNICATION SYSTEMS WITH BLOCK-ORIENTED RADIO INFORMATION TRANSMISSION
SYSTEME RADIORECEPTEUR A RECEPTION EN DIVERSITE D'ANTENNES POUR SYSTEMES DE TELECOMMUNICATIONS A TRANSMISSION DE MESSAGES RADIO ORIENTES PAR BLOCS

(30) Priorität: 21.06.1994 DE 4421643
(43) Veröffentlichungstag der Anmeldung: 09.04.1997
(73) Patentinhaber: SIEMENS AKTIENGESELLSCHAFT, 80333 München (DE)
(72) Erfinder: EUSCHER, Christoph, D-46414 Rhede (DE)
(86) Internationale Anmeldenummer: DE9500803
(87) Internationale Veröffentlichungsnummer: WO9535600

(56) Entgegenhaltungen:
- EP-A- 0 440 239
- EP-A- 0 452 289
- EP-A- 0 722 234
- WO-A-94/08404
- WO-A-94/10762
- GB-A- 2 268 364

## Beschreibung

Die Erfindung betrifft eine Antenna Diversity-Funkempfangsanordnung für Telekommunikationssysteme mit einer blockorientierten Übertragung von Funknachrichten.

Außerdem betrifft die Erfindung ein Verfahren zum Auswählen von Antennen in einer Antenna Diversity-Funkempfangsanordnung für Telekommunikationssysteme mit einer blockorientierten Übertragung von Funknachrichten.

Telekommunikationssysteme mit einer blockorientierten Übertragung von Funknachrichten sind in ihrer technischen Entwicklung, analog zu dem in der leitungsgebundenen Telekommunikationstechnik bereits seit längerem bestehenden ISDN-Standard (Integrated Services Digital Network), an verschiedene Standards gebunden. Mit dem Begriff "blockorientierte Übertragung" sind im wesentlichen Übertragungsarten von Funknachrichten definiert, die nach dem Zeitlagegetrenntverfahren (TDMA = Time Division Multiple Access) oder nach dem Codelagegetrenntverfahren (CDMA = Code Division Multiple Access) übertragen werden. Bekannte, auf das TDMA-Verfahren basierende Telekommunikationssysteme sind beispielsweise Schnurlos-Telekommunikationssysteme nach dem DECT-Standard (Digital European Cordless Telecommunication) und Mobilfunk-Telekommunikationssysteme nach dem GSM-Standard (Groupe Spéciale Mobile oder Global Systems for Mobile Communication).

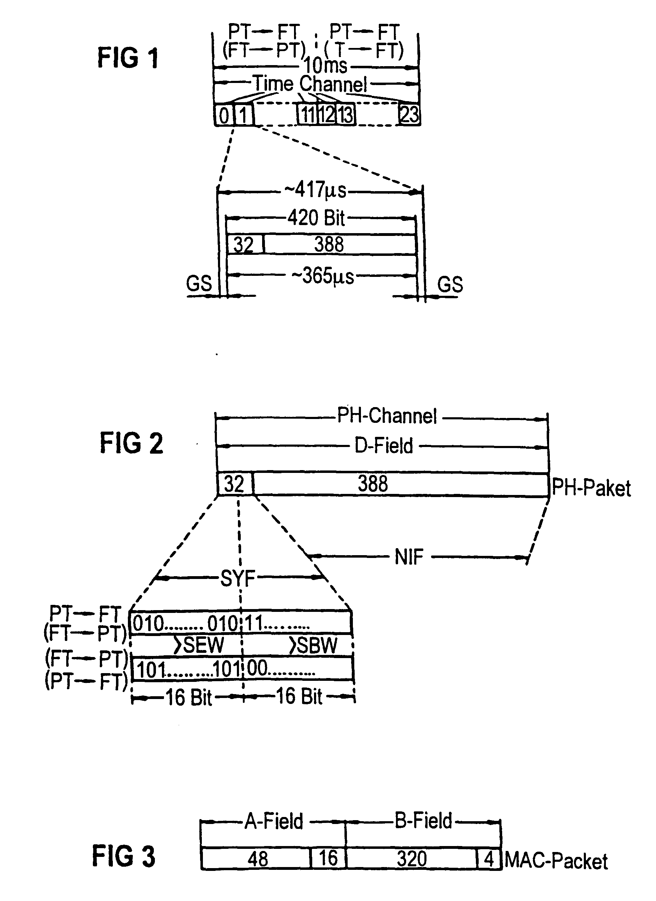

Für die schnurlose Telekommunikation nach dem DECT-Standard (vgl. European Telecommunication Standard -Final Draft-; prETS 300 175-1, 5/1992; ETS-Institute 06921 Sophia Antipolis, France) wird eine dynamische Kanalauswahl von ca. 120 verfügbaren Kanälen durchgeführt. Die 120 Kanäle ergeben sich daraus, daß bei dem DECT-Standard zehn Frequenzbänder zwischen 1,8 und 1,9 GHz verwendet werden, wobei in jedem Frequenzband gemäß der Darstellung in Figur 1 im Zeitmultiplex (TDMA = Time Division Multiple Access) mit einem Zeitmultiplexrahmen von 10 ms gearbeitet wird. In diesem Zeitmultiplexrahmen werden 24 (von 0 bis 23) Zeitkanäle definiert und dadurch ein Rahmenschema vorgegeben. Dieses Rahmenschema wird dann derart benutzt, daß für jedes Frequenzband maximal 12 einer Basisstation FT (Fixed Termination) zugeordnete Mobilteile PT (Portable Termination) eines DECT-Telekommunikationssystems gleichzeitig im Duplexbetrieb (PT → FT und FT → PT bzw. FT → PT und PT → FT) arbeiten können.

Den 24 Zeitkanälen werden dabei jeweils Zeitschlitze (Time Slots) mit einer Zeitschlitzdauer von 417 µs zugeordnet. Der Zeitschlitz gibt dabei die Zeit an, in der Informationen (Daten) übertragen werden. Dieses Übertragen der Informationen im Duplexbetrieb wird auch als Ping-Pong-Verfahren bezeichnet, weil zu einem bestimmten Zeitpunkt gesendet und zu einem anderen Zeitpunkt empfangen wird. Bei diesen Ping-Pong-Verfahren wird in jedem Zeitschlitz ein Burst mit einer Zeitdauer von 365 µs oder einer Bitlänge von 420 Bits bei einem Datendurchsatz von 42 kBit/s übertragen. Bezogen auf den Zeitmultiplexrahmen ergibt sich unter Berücksichtigung, daß in einem Sicherheitszeitrahmen GS (Guard Space) an beiden Enden des Zeitrahmens jeweils 30 Bit zur Vermeidung von Überlappungen durch angrenzende Zeitschlitze zur Verfügung stehen, ein Gesamt-Datendurchsatz von 1,152 MBit/s. Die zeitliche Aufeinanderfolge der übertragenen Impulse pro Zeitmultiplexrahmen definiert nach Figur 2 einen PH-Kanal, dem sogenannten Physical Channel, der einer physikalischen Schicht, dem sogenannten Physical Layer (PH-L), zugeordnet ist. Das dabei übertragene Datenpaket von 420 Bit wird als PH-Paket bezeichnet und einem D-Feld zugeordnet. Von den 420 Datenbits (Folge von H/L-Bitwerten) in dem PH-Paket sind 32 Bit für die Synchronisation einem Synchronisationsfeld SYF und 388 Bit für die Übertragung von Nutzinformationen einem Nutzinformationsfeld NIF verwendet.

Die 32 Bit in dem Synchronisationsfeld SYF unterteilen sich wiederum in zwei Datenbitfolgen von jeweils 16 Bit. Die erste Datenbitfolge (Folge mit den ersten 16 H/L-Bitwerten) ist ein Sync-Einleitungswort SEW, mit der die Synchronisation eingeleitet wird. Für eine Übertragungsrichtung "Mobilteil PT → Basisstation FT" besteht dieses Sync-Einleitungswort SEW im Idealfall aus einer periodischen "101"- oder "HLH"-Sequenz und für die umgekehrte Übertragungsrichtung "Basisstation FT → Mobilteil PT" aus einer ebenfalls periodischen "010"- oder "LHL"-Sequenz. Die in den Figuren 1 und 2 in Klammern gesetzten Basisstation/Mobilteil-Zuordnungen sind in Abhängigkeit davon, welche Sequenz welcher Übertragungsrichtung zugeordnet wird, alternativ möglich.

Die zweite Datenbitfolge (Folge mit den zweiten 16 H/L-Bit-werten) ist ein Sync-Bestätigungswort SBW, mit der die mit dem Sync-Einleitungswort SEW eingeleitete Synchronisation bestätigt werden muß. Bei dieser Bestätigung müssen die Datenbits des Sync-Bestätigungswortes SBW im wesentlichen erkannt werden. Nur wenn dies der Fall ist, wird die mit dem Sync-Einleitungswort SEW eingeleitete Synchronisation akzeptiert. Die Synchronisation ist dabei eingeleitet, wenn mit gewisser Wahrscheinlichkeit davon ausgegangen werden kann, daß das Sync-Einleitungswort SEW eine "HLH"- bzw. "LHL"-Sequenz ist.

Darüber hinaus sind in dem DECT-Standard analog zum ISDN-Standard mit dem ISO/OSI 7-Schichtenmodell noch weitere Schichten (Layer) definiert. Eine dieser Schichten ist ein Medium Access Control Layer (MAC-L), dem gemäß Figur 3 für die Nutzinformationsübertragung die 388 Bit des Nutzinformationsfeldes NIF zugeordnet werden. Das Nutzinformationsfeld NIF setzt sich dabei aus einem A-Feld und einem B-Feld zusammen. Von den 388 Bit des Nutzinformationsfeldes NIF umfaßt das A-Feld 64 Bit, die unter anderem für Meldungen (Messages) beim Zusammenschluß der Basisstation mit den Mobilteilen des DECT-Telekommunikationssystems genutzt werden. Die übrigen 324 Bit sind dem B-Feld zugeordnet, wovon 320 Bit für Sprachdaten und 4 Bit zur Erkennung von Teilinterferenzen des Impulses genutzt werden. Die 324 Bit des B-Feldes werden schließlich im Rahmen des ISO/OSI 7-Schichtenmodells weiteren ISO/OSI-Schichten zugeordnet.

Das DECT-Telekommunikationssystem weist in der einfachsten Form eine Basisstation mit mindestens einem Mobilteil auf. Komplexere (z. B. vernetzte) Systeme enthalten mehrere Basis-stationen mit jeweils mehreren Mobilteilen. Aufgrund der 24 im DECT-Standard definierten Zeitkanäle können der Basisstation bis zu 12 Mobilteile zugeordnet werden, die mit der Basisstation im Duplexbetrieb kommunizieren. Für den im DECT-Standard ebenfalls definierten Zeitmultiplexrahmen von 10 ms bedeutet der Duplexbetrieb, daß alle 5 ms Informationen von der Basisstation zu dem Mobilteil oder umgekehrt übertragen werden.

Bei der Übertragung von hochfrequentmodulierten Funknachrichten - z. B. DECT-Funknachrichten im GHz-Bereich - sind die Übertragungsverhältnisse aufgrund der Ausbreitungseigenschaften des hochfrequenten Trägersignals innerhalb eines kleinen räumlichen Bereichs von wenigen Zentimetern (Zentimeterbereich) häufig sehr verschieden. Dies hat zur Folge, daß bei bewegten Systemen, wie dem DECT-Telekommunikationssystem, selbst bei kleinen Geschwindigkeiten von ca. 1 m/s die Übertragungsverhältnisse zeitlich stark schwanken. Um diesen zeitlichen Schwankungen der Übertragungsverhältnisse zumindest teilweise begegnen zu können, ist es bekannt, zumindest an einem Teil des bewegten Systems (z. B. der Basisstation) eine zweite, räumlich versetzte Antenne zu installieren. Aufgrund der räumlichen Trennung liegen an den Antennen unterschiedliche Empfangsverhältnisse vor, die durch Umschaltung der Antennen auswählbar sind. Diese unter dem Begriff "Antenna Diversity" bekannte Methode (vgl. Proceedings of International Conference on Communications - ICC'91; 23.-26. Juni 1991, New York (US), Seiten 1480 bis 1484 und Patent Abstracts of Japan, Vol. 11, No. 231 (E-527), 28. Juli 1987 in Verbindung mit JP-A-62047222) ermöglicht einen verbesserten Empfang der Funknachrichten in bewegten Systemen mit bereichsweise schlechten Übertragungsbedingungen. Die Antenna Diversity-Methode eignet sich insbesondere für auf das TDMA-Verfahren basierende DECT-Telekommunikationssysteme, bei denen in der Zeit zwischen zwei Zeitschlitzen die Möglichkeit des Antennenwechsels besteht, ohne daß die übertragene Funknachricht dadurch gestört wird.

Werden gemäß den Figuren 4 und 5 in einer aus der WO 94/10812 bekannten Antenna Diversity-Funkempfangsanordnung FT, PT (z. B. Basisstation und/oder Mobilteil eines Schnurlostelefons) mindestens zwei Antennen A1, A2, jedoch nur ein einem Funkteil RE, RE-T, RE-R der Antenna Diversity-Funkempfangsanordnung FT, PT zugeordneter Empfänger REC verwendet, so besteht gemäß der WO 94/10764 für die Steuerung der Antenna Diversity-Umschaltung ein entscheidendes Problem darin, daß die Empfangsverhältnisse an den beiden Antennen nicht gleichzeitig bewertet werden können. Es wird deshalb vorgeschlagen, die Empfangsverhältnisse je Zeitschlitz einmal z. B. durch eine Feldstärkemessung und/oder Auswertung von Übertragungsfehlern (CRC-Fehlern; Cycle Redundancy Check) zu überprüfen. Aufgrund dieser aktuellen und vorangegangenen zeitschlitzbezogenen Überprüfungen wird entschieden, ob die in dem nachfolgenden Zeitschlitz übertragene Funknachricht auf derselben oder einer anderen Antenne empfangen wird. Da sich aber die Übertragungsverhältnisse in der Zeit zwischen zwei Zeitschlitzen stark ändern können, ist es bei dieser bekannten Antenna Diversity-Methode nicht garantiert, daß die ausgewählte Antenne den zu diesem Zeitpunkt bestmöglichen Empfang bietet.

Darüber hinaus ist aus der US-5,241,701 eine Antenna Diversity-Funkempfangsanordnung für Telekommunikationssysteme mit einer blockorientierten Übertragung von Funknachrichten bekannt, bei der der Funkempfangsanordnung zugeordnete Antenna Diversity-Mittel mit zwei diesen zugeordneten Antennen derart ausgebildet sind, daß während der Empfangszeitdauer eines Nachrichtenblocks (Zeitschlitzes) der Funknachricht mindestens zwei verschiedene der den Antenna Diversity-Mitteln zugeordneten Antennen dem Empfangskanal der Antenna Diversity-Funkempfangsanordnung als Empfangsantenne abwechselnd zugeordnet werden.

Aus der WO94/08404 bzw. der nachveröffentlichten US-5,369,801 ist eine Antenna Diversity-Funkempfangsanordnung für Telekommunikationssysteme mit einer blockorientierten Übertragung von Funknachrichten bzw. ein Antennenauswahlverfahren in einer Antenna Diversity-Funkempfangsanordnung für Telekommunikationssysteme mit einer blockorientierten Übertragung von Funknachrichten bekannt, bei der bzw. bei dem die Antennenauswahl während des Empfangs von redundante Daten (Bits) aufweisenden Synchronisationsbits ("MUX 2"-Format) oder von als "Low Significant Bits" ausgebildete Nutzinformationsbits ("MUX 1"-Format) stattfindet.

Aus der nachveröffentlichten EP-0722 234 ist eine Antenna Diversity-Funkempfangsanordnung für Telekommunikationssysteme mit einer blockorientierten Übertragung von Funknachrichten bekannt. Die Funkempfangsanordnung weist zum einen eine Vielzahl von Antennen auf, wobei jeder Antenne der Funkempfangsanordnung zugeordnete Antenna Diversity-Mittel zugeordnet sind, und ist zum anderen derart ausgebildet, daß während der Empfangszeitdauer eines Nachrichtenblocks oder eines Steuerblocks die Antenne mit den besten Empfangseigenschaften ausgewählt und dem Empfangskanal der Funkempfangsanordnung zugeordnet wird. Durch den Einsatz separater Antenna Diversity-Mittel für jede Antenne, ist diese Antenna Diversity-Funkempfangsanordnung nur mit einem großen Aufwand zu realisieren.

Die der Erfindung zugrundeliegende Aufgabe besteht darin eine Antenna Diversity-Funkempfangsanordnung für Telekommunikationssysteme mit einer blockorientierten Übertragung von Funknachrichten anzugeben, die die aus dem Stand der Technik bekannten Nachteile vermeidet.

Diese Aufgabe wird durch die im Patentanspruch 1 angegebenen Merkmale gelöst.

Die der Erfindung zugrundeliegende Aufgabe besteht außerdem darin ein Antennenauswahlverfahren in einer Antenna Diversity-Funkempfangsanordnung für Telekommunikationssysteme mit einer blockorientierten Übertragung von Funknachrichten anzugeben, die die aus dem Stand der Technik bekannten Nachteile vermeidet.

Diese Aufgabe wird durch die im Patentanspruch 9 angegebenen Merkmale gelöst.

In einer Antenna Diversity-Funkempfangsanordnung für Telekommunikationssysteme mit einer blockorientierten Übertragung von Funknachrichten, z.B. einer Antenna Diversity-Basisstation eines DECT-Schnurlostelefons, bzw. bei einem Antennenauswahlverfahren in einer Antenna Diversity-Funkempfangsanordnung für Telekommunikationssysteme mit einer blockorientierten Übertragung von Funknachrichten, z.B. einer Antenna Diversity-Basisstation eines DECT-Schnurlostelefons, wird zur Verbesserung des "Antenna Diversity" im Sinne der der Erfindung zugrundeliegenden Aufgabe während des Empfangs eines redundante Daten enthaltenen Synchronisationseinleitungswortes eines in einem Nachrichtenblock einer Funknachricht, z.B. einer DECT-Funknachricht enthaltenden, aus dem Synchronisationseinleitungswort und einem Synchronisationsbestätigungswort bestehenden Synchronisationsfeldes, mindestens ein Antennenwechsel, beispielsweise aufgrund von Feldstärkemessungen, vorgenommen. Dabei werden die Antennen den Antenna Diversity-Mitteln derart zugeordnet, daß die Antennen diese Mittel gemeinsam benutzen. Dadurch, daß die Antennen während des Empfangs des Synchronisationseinleitungswortes den Antenna Diversity-Mitteln abwechselnd zugeordnet werden und die Antennen diese Antenna Diversity-Mittel gemeinsam benutzen, ist zum einen eine einfachere, aufwandsärmere Realisierung der Antenna Diversity-Funkempfangsanordnung und zum anderen in jedem Übertragungszeitschlitz der DECT-Funknachricht sowohl ein optimales "Antenna Diversity" als auch eine störungsfreie Übertragung von in der Funknachricht enthaltenen Nutzinformationen möglich.

Vorteilhafte Weiterbildungen der Erfindung sind in den Unteransprüchen angegeben.

Ein Ausführungsbeispiel der Erfindung wird anhand der Figuren 6 bis 9 erläutert. Es zeigen:
Figur 6 ein durch Antennenwechsel bei einer Antenna Diversity-Basisstation eines DECT-Schnurlostelefons gestörtes Empfangs-Synchronisationsfeld der Basisstation,
Figur 7 die zeitliche Aufeinanderfolge von meheren in DECT-Zeitmultiplexrahmen auftretenden DECT-Bursts.

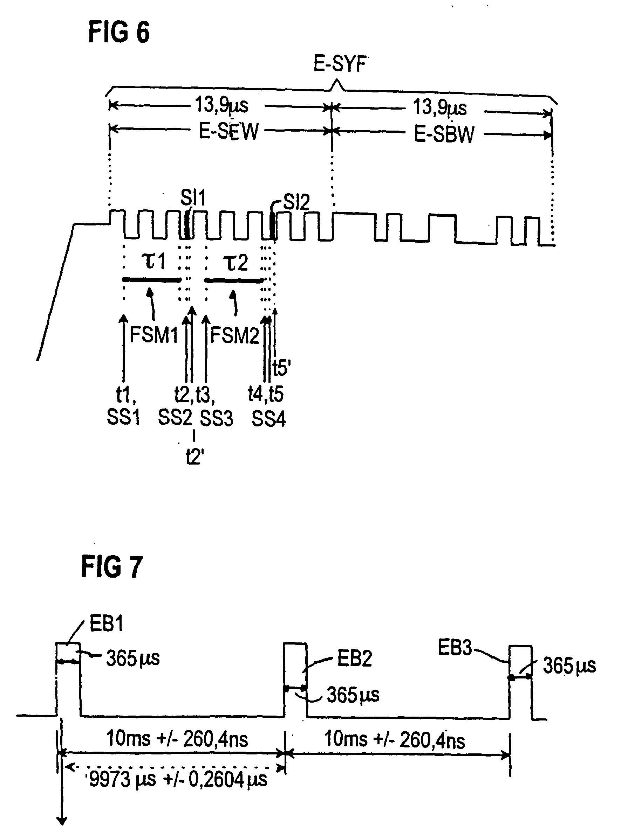

Figur 6 zeigt ein von einer Antenna Diversity-Basisstation eines DECT-Schnurlostelefons empfangenes Empfangs-Synchronisationsfeld E-SYF mit einem empfangsseitigen Sync-Einleitungswort E-SEW und einem empfangsseitigen Sync-Bestätigungswort E-SBW als analoges Signal, das durch mindestens einen Antennenwechsel an der Antenna Diversity-Basisstation gestört ist. Das Empfangs-Synchronisationsfeld E-SYF ist dabei das Abbild eines z. B. von einem Mobilteil des DECT-Schnurlostelefons gesendeten und auf der Funkstrecke zwischen dem Mobilteil und der Basisstation übertragenen Sende-Synchronisationsfeldes mit einem sendeseitigen Sync-Einleitungswort und einem sendeseitigen Sync-Bestätigungswort. Das - gemäß der Darstellung in der Figur 2 - 32 Bit lange Sende-Synchronisationsfeld wird unmittelbar nach der Aktivierung des Mobilteiles ausgestrahlt. Für die Übertragung (Senden und Empfangen) des Sende- bzw. Empfangs-Synchronisationsfeldes werden bei der eingangs angegebenen Datenrate von 1,152 MBit/s etwa 27,8 µs benötigt. Davon entfallen 13,9 µs auf die Übertragung des Sync-Einleitungswortes und ebenfalls 13,9 µs auf die Übertragung des Sync-Bestätigungswortes.

Während das empfangsseitige Sync-Einleitungswort E-SEW dazu dient, die Antenna Diversity-Basisstation auf Bitebene zu synchronisieren, dient das empfangsseitige Sync-Bestätigungswort E-SBW dazu, die Antenna Diversity-Basisstation auf Wortebene zu synchronisieren. Da dem sendeseitigen Sync-Einleitungswort eine Synchronisationsinformation zugeordnet ist, die aus einer alternierenden "1/0"- bzw. "0/1"-Bitfolge besteht und da für die Bitsynchronisation lediglich das Erkennen der "1/0"- bzw. "0/1"-Alternanz in der Bitfolge erforderlich ist, besitzt die in dem empfangsseitigen Sync-Einleitungswort E-SEW enthaltene Synchronisationsinformation - bei störungsfreier Übertragung auf der Funkstrecke - einen redundanten Informationsanteil. Aufgrund dieser Redundanz in der Synchronisationsinformation bietet sich das empfangsseitige Sync-Einleitungswort E-SEW als Zeitraum für einen bzw. mehrere Antennenwechsel bei der Antenna Diversity-Basisstation für ein verbessertes "Antenna Diversity" an. Das empfangsseitige Sync-Einleitungswort E-SEW ist hierfür deshalb geeignet, weil
(1) zum Zeitpunkt des Empfangs des empfangsseitigen Sync-Bestätigungswortes E-SBW die Auswahl der Antenne abgeschlossen sein sollte, da die richtige Erkennung des empfangsseitigen Sync-Bestätigungswortes E-SBW für den Empfang bzw. Verlust der in dem Zeitschlitz übertragenen Information ausschlaggebend ist und
(2) die Störung von einem oder wenigen Bit des 16 Bit langen Sync-Einleitungswortes E-SEW nicht relevant ist, da zur Erzielung der Bitsynchronität erfahrungsgemäß bereits wenige Bit (ca. 6 Bit) ausreichen.

Die einzelnen in der Basisstation ablaufenden Verfahrensschritte zur Durchführung des Antennenwechsels, z. B. von einer ersten Antenne A1 zu einer zweiten Antenne A2, werden im folgenden anhand der Figur 6 erläutert. Für das vorliegende Ausführungsbeispiel werden die einzelnen Verfahrensschritte dabei vorzugsweise alle 10 µs in den Zeitschlitzen durchgeführt, in denen das Mobilteil sendet und die Basisstation empfängt. Hieran ändert sich auch dann nichts, wenn im umgekehrten Fall das Mobilteil oder sogar beide, Mobilteil und Basisstation, mindestens zwei Antennen aufweisen und dabei die Basisstation sendet, während das Mobilteil empfängt. Für diese Sende-/Empfangsrichtung wiese das entsprechende Empfangs-Synchronisationsfeld dann - gemäß der Figur 2 - eine invertierte Bitfolge zu dem Empfangs-Synchronisationsfeld E-SYF nach Figur 6 auf.

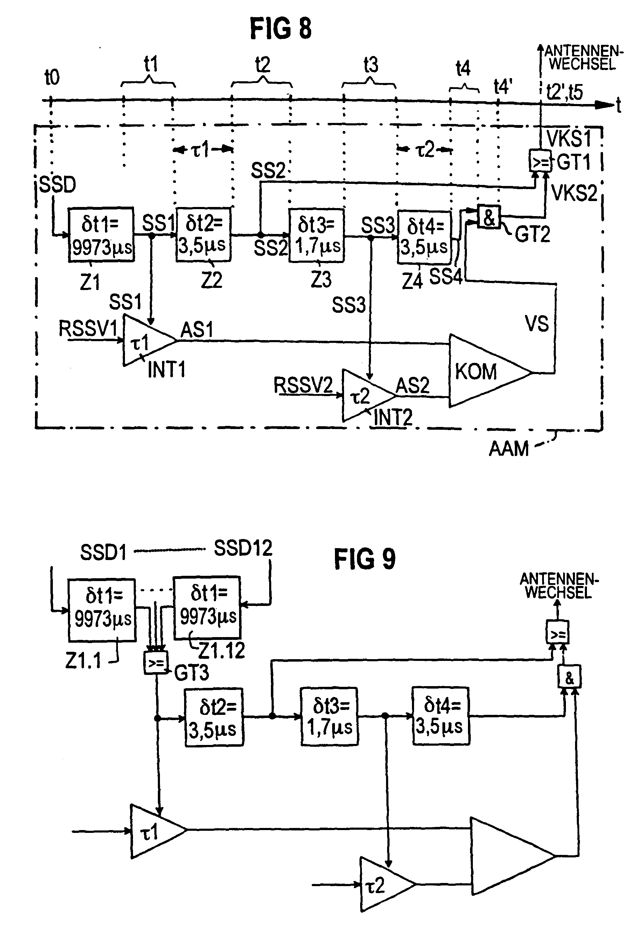

Zu einem Zeitpunkt tl, bei dem die Antenne A1 als Empfangsantenne dient, wird durch ein erstes Antenna Diversity-Steuersignal SS1 der Basisstation eine erste Feldstärkemessung FSM1 gestartet. Die Messung erstreckt sich dabei beispielsweise über einen ersten Meßzeitraum τ1, in dem beispielsweise bereits vier Bits (2. bis 5. Bit des empfangsseitigen Sync-Einleitungswortes E-SEW) für die Bitsynchronisation ausgewertet worden sind. Anschließend wird zu einem zweiten Zeitpunkt t2 durch ein zweites Antenna Diversity-Steuersignal SS2 der Basisstation ein Antennenwechsel von der ersten Antenne A1 zu der zweiten Antenne A2 eingeleitet. Dieser Antennenwechsel ist durch eine schaltungsbedingte Wechselzeit (vgl. Figur 8) zu einem Zeitpunkt t2' abgeschlossen. Die Einleitung des Antennenwechsels zum Zeitpunkt t2 erfolgt z. B. während des sechsten Bits (nach Figur 6 ein Low-Bit) des empfangsseitigen Sync-Einleitungswortes E-SEW. Durch den Antennenwechsel kann dabei das jeweilige Bit gestört sein. In Figur 6 ist diese Störung durch einen ersten Störimpuls SI1 dargestellt. Nach dem Antennenwechsel wird zu einem Zeitpunkt t3 an der Antenne A2 der Basisstation durch ein zweites Antenna Diversity-Steuersignal SS3 eine zweite Feldstärkemessung FSM2 gestartet. Diese zweite Messung FSM2 erstreckt sich dabei über einen zweiten Meßzeitraum τ2, der jedoch zu Meßzwecken bezüglich der Dauer mit dem ersten Meßzeitraum τ1 übereinstimmt. In dem Meßzeitraum τ2 sind gegebenenfalls weitere vier Bits (8. bis 11. Bit des empfangsseitigen Sync-Einleitungswortes E-SEW) für die Bitsynchronisation ausgewertet worden. Damit für die beiden Meßzeiträume das gleiche Verhältnis von Low-Bits ("0"-Bit) zu High-Bits ("1"-Bit) gemessen wird, liegen die Startzeitpunkte t1, t3 für die Feldstärkemessungen FSM1, FSM2 zeitlich um ein geradzahliges Vielfaches der Bit-Übertragungszeit auseinander. Diese Bit-Übertragungszeit beträgt für das DECT-Schnurlostelefon in etwa 868 ns. Der zeitliche Zusammenhang zwischen den Startzeitpunkten t1, t3 ist deshalb wichtig, weil das erste Antenna Diversity-Steuersignal SS1 nur begrenzt genau generiert werden kann. Die Gründe hierfür werden im folgenden anhand der Figur 7 erläutert.

Figur 7 zeigt die zeitliche zeitschlitzbezogene Aufeinanderfolge mehrerer von der Basisstation des DECT-Schnurlostelefons in mehreren Zeitmultiplexrahmen empfangener Empfangs-Bursts EB1, EB2, EB3, die auf entsprechende von dem Mobilteil des DECT-Schnurlostelefons gesendete Sende-Bursts zurückgehen. Im aktiven Verbindungszustand (Kommunikationszustand) zwischen einer Funksendeanordnung (hier: Mobilteil des DECT-Schnurlostelefons) und einer Funkempfangsanordnung (hier: Basisstation des DECT-Schnurlostelefons) wird gemäß den Ausführungen zur Figur 1 alle 10 ms in Zeitschlitzen ein Burst von ca. 365 µs Länge gesendet. Während der verbindungsfreien Zeit mit einer Zeitdauer von ca. 9635 µs (Ruhezustand) können die in dem Mobilteil und der Basisstation von entsprechenden Taktgebern abgegebenen Taktfrequenzen um maximal 1/3 Bit zeitlich gegeneinander driften. Bei einer Bit-Übertragungszeit von 868 ns entspricht diese Zeitdrift einer Zeitspanne von 260,4 ns.

Aufgrund dieser schnurlostelefonspezifischen Zeitdrift kann das erste Antenna Diversity-Steuersignal SS1 in bezug auf ein Referenzsignal auch nur mit einer zeitlichen Ungenauigkeit von 260,4 ns generiert werden. Als Referenzsignal bietet sich dabei beispielsweise ein als Sync-Detect-Signal bezeichnetes Synchronisationssignal SDS an, das mit der Zeitabweichung von 0,264 µs regelmäßig in jedem Zeitschlitz auftritt und mit dem die zeitschlitzbezogene Synchronisation eingeleitet wird. Der zeitliche Abstand zwischen dem zeitschlitzbezogenen Synchronisationssignal SDS und dem Beginn des nachfolgenden Zeitschlitzes beträgt in etwa 9973 µs. Dieser zeitliche Abstand von 9973 µs dient als zeitliche Bezugsgröße für die im Zusammenhang mit dem zu verbessernden "Antenna Diversity" notwendigen Maßnahmen. So liegt beispielsweise , wenn in einem n-ten (z. B. ersten mit n=1) Zeitschlitz mit einem n-ten Synchronisationssignal als Referenzsignal für das Antenna Diversity-Steuersignal SS1 die Basisstation einen n-ten Empfangs-Burst empfangen hat, der Zeitpunkt t1 für die erste Feldstärkemessung FSM1 9973 µs später in einem (n+1)-ten (zweiten) Zeitschlitz.

Mit dem auf diese Weise festgelegten Zeitpunkt t1 liegen auch die Zeitpunkte t2, t3 eindeutig fest. Diesbezüglich gilt das gleiche auch für weitere, im Zusammenhang mit der Verbesserung des "Antenna Diversity" stehende Zeitpunkte t4, t5, t5' gemäß Figur 6.

Bis zu einem vierten Zeitpunkt t4 werden die aus den beiden Feldstärkemessungen FSM1, FSM2 resultierenden Feldstärkemeßwerte verglichen und in Abhängigkeit davon ein Vergleichsergebnis festgestellt. Wird anhand des Vergleichsergebnisses mit einem vierten Antenna Diversity-Steuersignal SS4 festgestellt, daß der zweite aus der zweiten Feldstärkemessung FSM2 resultierende Meßwert kleiner als der erste aus der ersten Feldstärkemessung FSM1 resultierende Meßwert ist, so wird zu einem fünften Zeitpunkt t5 auf die Antenne A1 zurückgeschaltet (erneuter Antennenwechsel). Dieser Antennenwechsel ist zu einem Zeitpunkt t5' beendet. Durch den Beginn des Antennenwechsels zum Zeitpunkt t5, z. B. während des zwölften Bits (nach Figur 6 ein Low-Bit) des empfangsseitigen Sync-Einleitungswortes E-SEW, entsteht ein zweiter Störimpuls SI2, durch den das entsprechende Bit gestört sein kann. Die beiden durch die jeweiligen Antennenwechsel hervorgerufenen Störimpulse SI1, SI2 haben im allgemeinen keine unmittelbare Auswirkung auf das Erkennen der "1/0"- bzw. "0/1"-Alternanz in der Bitfolge des empfangsseitigen Sync-Einleitungswortes E-SEW. So kann mit einer gewissen Wahrscheinlichkeit davon ausgegangen werden, daß
(1) die Alternanz in der Bitfolge auch ohne die beiden gestörten Bits erkennbar ist und
(2) bei Nichterkennen der Alternanz in der Bitfolge diese mit einer gewissen Wahrscheinlichkeit auch mit den beiden gegebenenfalls ungestörten Bits nicht erkannt und somit ein Verlust des Empfangs-Burst verhindert worden wäre.

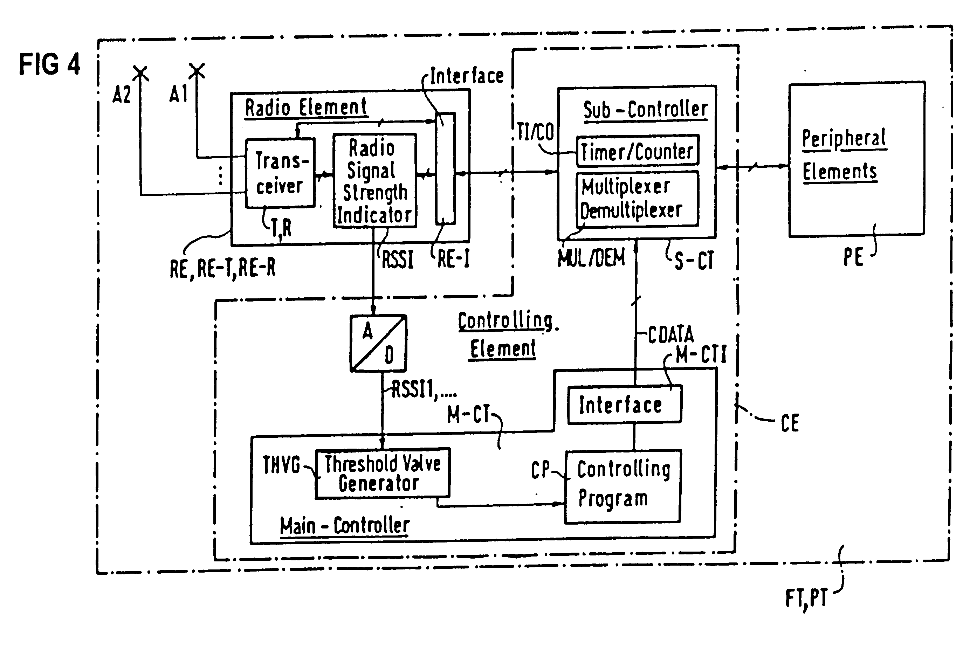

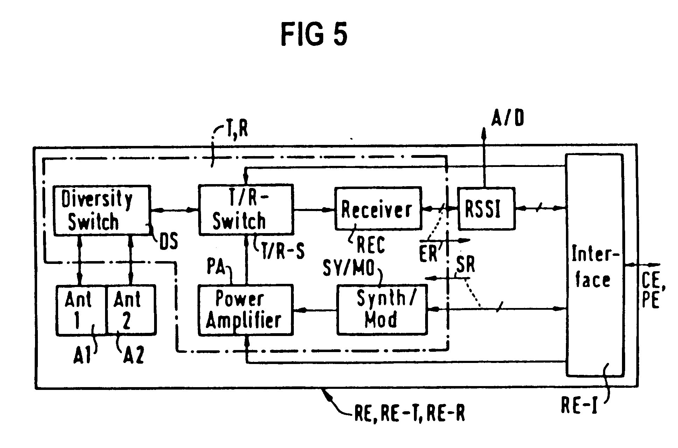

Figur 8 zeigt Antennenauswahlmittel AAM, mit denen die in der Figur 6 beschriebenen Verfahrensschritte zur Durchführung des Antennenwechsels ausführbar sind. Die Antennenauswahlmittel AAM bestehen gemäß der Darstellung in der Figur 8 vorzugsweise aus einer Anordnung von elektronischen Schaltungen. Diese Antennenauswahlmittel AAM bzw. Schaltungsanordnung sind Antenna Diversity-Mitteln RE, RE-T, RE-R, DS, RSSI, A/D, M-CT der Antenna Diversity-Funksendeanordnung und -Funkempfangsanordnung FT, PT nach den Figuren 4 und 5 zugeordnet. Alternativ zur elektronischen Schaltungsanordnung können die Antennenauswahlmittel auch als Programmodule ausgebildet sein, sofern mit diesen das Antennenauswahlkriterium - im vorliegenden Ausführungsbeispiel die Feldstärke - schnell genug ermittelt werden kann. Als weiteres Auswahlkriterium könnte z. B. das Erkennen/Nichterkennen einer TDMA-spezifischen Signalfolge der Funknachricht (hier: die "1/0"-Signalfolge des empfangsseitigen Sync-Einleitungswortes E-SEW) dienen.

Die Antennenauswahlmittel AAM weisen mehrere hintereinander geschaltete Zähler Z1...Z4 auf, die in bezug auf das Synchronisationssignal SSD (Sync-Detect-Signal) im wesentlichen die Antenna Diversity-Steuersignale SS1...SS4 erzeugen. Die Verwendung von Zählern bietet sich insbesondere deshalb an, weil sämtliche Zeitspannen, die sich aus den Zeitdifferenzen zwischen den Zeitpunkten tl...t5' und einem Zeitpunkt t0 (Auftritt des Synchronisationssignals SSD) ergeben, aus der Bittaktrate von 1,152 MHz ableitbar sind. Zum Zeitpunkt t0 wird ein erster Zähler Z1 eingangsseitig von dem Synchronisationssignal SSD gesteuert.

Der Zähler Z1 erfaßt dabei durch das Zählen von zu der Bittaktrate korrespondierenden Zeiteinheiten eine erste Zeitspanne ∂t1, die sich aus dem Zeitabstand zwischen den Zeitpunkten t1, t0 ergibt. Diese Zeitspanne ∂t1 beträgt - gemäß den Ausführungen zu den Figuren 6 und 7 - 9973 µs. Nach dem Erfassen der Zeitspanne ∂t1 gibt der Zähler Z1 zum Zeitpunkt t1 das erste Antenna Diversity-Steuersignal SS1 an den Eingang eines zweiten Zählers Z2 und an einen Steuereingang eines ersten Integrators INT1 ab. Durch das erste Steuersignal SS1 werden der zweite Zähler Z2 und der erste Integrator INT1 aktiviert.

Der zweite Zähler Z2 erfaßt dabei durch das Zählen von zu der Bittaktrate korrespondierenden Zeiteinheiten eine zweite Zeitspanne ∂t2, die sich aus dem Zeitabstand zwischen den Zeitpunkten t2, t1 ergibt. Diese Zeitspanne ∂t2 beträgt im vorliegenden Ausführungsbeispiel in etwa 3,5 µs. Während dieser Zeitspanne ∂t2, die dem Meßzeitraum τ1 entspricht, wird an dem Integrator INT1 die erste Feldstärkemessung FSM1 vorgenommen. Bei dieser Messung werden dem Integrator INT1 während des Meßzeitraumes τ1 eingangsseitig zugeführte erste Feldstärkewerte RSSV1 (Radio Signal Strength Values) zu einem ersten Ausgangssignal AS1 integriert.

Nach dem Ablauf der zweiten Zeitspanne ∂t2 bzw. des Meßzeitraums τ1 wird zum Zeitpunkt t2 das zweite Antenna Diversity-Steuersignal SS2 eingangsseitig einem dritten Zähler Z3 und einem ODER-Gatter GT1 zugeführt. An dem Gatter GT1 wird durch das Steuersignal SS2 ein ODER-Verknüpfungssignal VKS1 erzeugt, aufgrund dessen zum Zeitpunkt t2' (bedingt durch die Gatterlaufzeit am ODER-Gatter GT1) der Antennenwechsel von der ersten Antenne A1 zur zweiten Antenne A2 erfolgt. Darüber hinaus wird durch das Steuersignal SS2 der dritte Zähler Z3 aktiviert, so daß dieser durch das Zählen von zu der Bittaktrate korrespondierenden Zeiteinheiten eine dritte Zeitspanne ∂t3 erfaßt. Diese Zeitspanne δt3, die den Zeitabstand zwischen den Zeitpunkten t3, t2 angibt, beträgt im vorliegenden Ausführungsbeispiel 1,7 µs.

Nach dem Erfassen dieser Zeitspanne ∂t3 wird von dem dritten Zähler Z3 zum Zeitpunkt t3 das dritte Antenna Diversity-Steuersignal SS3 erzeugt, das eingangsseitig einem vierten Zähler Z4 zugeführt und auf einen Steuereingang eines zweiten Integrators INT2 gegeben wird. Der Zähler Z4 und der Integrator INT2 werden durch das Steuersignal SS3 aktiviert. Mit der Aktivierung erfaßt der Zähler Z4 durch das Zählen von zu der Bittaktrate korrespondierenden Zeiteinheiten eine vierte Zeitspanne ∂t4, die sich aus dem Zeitabstand zwischen den Zeitpunkten t4, t3 ergibt. Die Zeitspanne ∂t4 ist wie die Zeitspanne ∂t2 3,5 µs lang. Die Zeitspanne ∂t4 entspricht weiterhin dem in Figur 6 dargestellten zweiten Meßzeitraum τ2. In diesem Meßzeitraum τ2 werden an den Eingang des Integrators INT2 anliegende zweite Feldstärkewerte RSSV2 zu einem zweiten Ausgangssignal AS2 integriert.

Zum Zeitpunkt t4 gibt der vierte Zähler Z4 ein viertes Antenna Diversity-Steuersignal SS4 an ein UND-Gatter GT2 ab. Außerdem wird bis zu diesem Zeitpunkt t4 ein Vergleich zwischen den beiden Ausgangssignalen AS1, AS2 durchgeführt. Hierzu werden diese Ausgangssignale einem Komparator KOM zugeführt, der aus diesen beiden Ausgangssignalen AS1, AS2 ein Vergleichssignal VS erzeugt. Dieses Vergleichssignal VS wird ebenfalls dem UND-Gatter GT2 zugeführt. Das UND-Gatter GT2 bildet aus dem Steuersignal SS4 und dem Vergleichssignal VS ein logisches UND-Verknüpfungssignal VKS2, das zu einem Zeitpunkt t4' (bedingt durch die Gatterlaufzeit am UND-Gatter GT2) dem ODER-Gatter GT1 zugeführt wird. In dem ODER-Gatter GT1 werden das Steuersignal SS2 und das UND-Verknüpfungssignal VKS2 logisch verknüpft. Durch das dabei entstehende ODER-Verknüpfungssignal VKS1 wird unabhängig von dem Steuersignal SS2 zum Zeitpunkt t5 von der zweiten Antenne A2 auf die erste Antenne A1 zurückgeschaltet, weil sich durch die Feldstärkemessungen FSM1, FSM2 gezeigt hat, daß der Empfang auf der ersten Antenne A1 besser ist als der auf der zweiten Antenne A2.

Da eine DECT-Basisstation gleichzeitig mit mehreren Mobilteilen (bis zu 12 Mobilteilen), die alle unterschiedlich zeitlich zur Basisstation driften, erhöht sich der Aufwand zur Generierung des ersten Antenna Diversity-Steuersignals SS1 in der Weise, daß für jedes einzelne Mobilteil ein eigener erster Zähler vorzusehen ist. Eine dafür entsprechende Ausbildung der Antennenauswahlmittel zeigt ausgehend von der Figur 8 Figur 9, wo die einzelnen mobilteilbezogenen Zähler Z1.1...Z1.12 ausgangsseitig z. B. auf ein weiteres ODER-Gatter GT3 geschaltet werden.

## Patentansprüche

1. Antenna Diversity-Funkempfangsanordnung für Telekommunikationssysteme mit einer blockorientierten Übertragung von Funknachrichten, bei der Antenna Diversity-Mittel vorgesehen sind, denen mehrere Antennen (A1, A2) zugeordnet sind und die derart ausgebildet sind, daß
a) während der Empfangszeitdauer eines redundante Daten enthaltenden Synchronisationseinleitungswortes (SEW, E-SEW) eines in einem Nachrichtenblock der Funknachricht enthaltenden, aus dem Synchronisationseinleitungswort (SEW, E-SEW) und einem Synchronisationsbestätigungswort (SBW, E-SBW) bestehenden Synchronisationsfeldes (SYF, E-SYF) mindestens zwei verschiedene der den Antenna Diversity-Mitteln (RE, RE-T, RE-R, DS, RSSI, A/D, M-CT) zugeordneten Antennen (A1, A2) dem Empfangskanal der Antenna Diversity-Funkempfangsanordnung (FT, PT) als Empfangsantenne zugeordnet werden,
b) von den dem Empfangskanal während der Empfangszeitdauer des Synchronisationseinleitungswortes (SEW, E-SEW) zugeordneten Antennen (A1, A2) die Antenne mit der besten Empfangscharakteristik für die Empfangszeitdauer des Nachrichtenblocks dem Empfangskanal zugeordnet wird,
wobei die Antenna Diversity-Mittel (RE, RE-T, RE-R, DS, RSSI, A/D, M-CT) den Antennen (A2, A2) derart zugeordnet sind, daß die Antennen (A1, A2) die Antenna Diversity-Mittel gemeinsam benutzen und die Antennen (A1, A2) den Antenna Diversity-Mitteln abwechselnd zugeordnet werden.

2. Antenna Diversity-Funkempfangsanordnung nach Anspruch 1, **dadurch gekennzeichnet,** daß die Funknachricht als TDMA-Funknachricht ausgebildet ist.

3. Antenna Diversity-Funkempfangsanordnung nach Anspruch 1, **dadurch gekennzeichnet,** daß die Funknachricht als CDMA-Funknachricht ausgebildet ist.

4. Antenna Diversity-Funkempfangsanordnung nach einem der Ansprüche 1 bis 3, **dadurch gekennzeichnet,** daß die Antenna Diversity-Mittel (RE, RE-T, RE-R, DS, RSSI, A/D, M-CT) Antennenauswahlmittel (AAM) enthalten, die derart ausgebildet sind, daß die Antennenauswahl durch Feldstärkemessungen (FSM1, FSM2) erfolgt.

5. Antenna Diversity-Funkempfangsanordnung nach Anspruch 4, **dadurch gekennzeichnet,** daß die Antennenauswahlmittel (AAM) einen Komparator (KOM) aufweisen, dem mit gemessenen Feldstärkewerten (RSSV1, RSSV2) korrespondierende Spannungswerte (AS1, AS2) zugeführt werden.

6. Antenna Diversity-Funkempfangsanordnung nach Anspruch 2 und 4, **dadurch gekennzeichnet,** daß die Antennenauswahlmittel (AAM) derart ausgebildet sind, daß die Antennenauswahl durch das Erkennen/Nichterkennen einer TDMA-spezifischen Signalfolge der Funknachricht erfolgt.

7. Antenna Diversity-Funkempfangsanordnung nach Anspruch 6, **dadurch gekennzeichnet,** daß die TDMA-spezifische Signalfolge als "1/0"-Signalfolge ausgebildet ist.

8. Antenna Diversity-Funkempfangsanordnung nach einem der Ansprüche 1 bis 2 oder 4 bis 7, **dadurch gekennzeichnet,** daß der Nachrichtenblock (SYF, NIF, E-SYF) als DECT-spezifischer Nachrichtenblock ausgebildet ist.

9. Verfahren zum Auswählen von Antennen in einer Antenna Diversity-Funkempfangsanordnung für Telekommunikationssysteme mit einer blockorientierten Übertragung von Funknachrichten, bei dem
a) während der Empfangszeitdauer eines redundante Daten enthaltenen Synchronisationseinleitungswortes (SEW, E-SEW) eines in einem Nachrichtenblock der Funknachricht enthaltenden, aus dem Synchronisationseinleitungswort (SEW, E-SEW) und einem Synchronisationsbestätigungswort (SBW, E-SBW) bestehenden Synchronisationsfeldes (SYF, E-SYF) mindestens zwei verschiedene Antennen (A1, A2) dem Empfangskanal der Antenna Diversity-Funkempfangsanordnung (FT, PT) als Empfangsantenne zugeordnet werden,
b) von den dem Empfangskanal während der Empfangszeitdauer des Synchronisationseinleitungswortes (SEW, E-SEW) zugeordneten Antennen (A1, A2) die Antenne mit der besten Empfangscharakteristik für die Empfangszeitdauer des Nachrichtenblocks dem Empfangskanal zugeordnet wird,
wobei die Antennen (A1, A2) diese Antenna Diversity-Mittel (RE, RE-T, RE-R, DS, RSSI, A/D, M-CT) der Antenna Diversity-Funkempfangsanordnung (FT,PT) gemeinsam benutzen und die Antennen (A1, A2) den Antenna Diversity-Mitteln (RE, RE-T, RE-R, DS, RSSI, A/D, M-CT) abwechselnd zugeordnet werden.

## Claims

1. Antenna diversity radio receiving arrangement for telecommunications systems using block-oriented transmission of radio messages, in which antenna diversity means are provided which have a plurality of associated antennas (A1, A2) and which are designed in such a manner that
a) during the receiving time periodof a synchronization initiation word (SEW, E-SEW) (which contains redundant data) in a synchronization field (SYF, E-SYF) which is contained in a message block of the radio message and comprises the synchronization initiation word (SEW, E-SEW) and a synchronization confirmation word (SBW, E-SBW), at least two different antennas (A1, A2), which are associated with the antenna diversity means (RE, RE-T, RE-R, DS, RSSI, A/D, M-CT), are assigned as a receiving antenna to the receiving channel of the antenna diversity radio receiving arrangement (FT, PT),
b) of the antennas (A1, A2) which are assigned to the receiving channel during the receiving time period of the synchronization initiation word (SEW, E-SEW), that antenna having the best receiving characteristic is assigned to the receiving channel for the receiving time period of the message block,
in which
the antenna diversity means (RE, RE-T, RE-R, DS, RSSI, A/D, M-CT) are assigned to the antennas (A1, A2) in such a manner that the antennas (A1, A2) use the antenna diversity means jointly, and the antennas (A1, A2) are alternately assigned to the antenna diversity means.

2. Antenna diversity radio receiving arrangement according to Claim 1, **characterized in that** the radio message is designed as a TDMA radio message.

3. Antenna diversity radio receiving arrangement according to Claim 1, **characterized in that** the radio message is designed as a CDMA radio message.

4. Antenna diversity radio receiving arrangement according to one of Claims 1 to 3, **characterized in that** the antenna diversity means (RE, RE-T, RE-R, DS, RSSI, A/D, M-CT) contain antenna selection means (AAM) which are designed in such a manner that the antenna selection is carried out by field strength measurements (FSM1, FSM2).

5. Antenna diversity radio receiving arrangement according to Claim 4, **characterized in that** the antenna selection means (AAM) have a comparator (KOM) to which voltage values (AS1, AS2) corresponding to the measured field strength values (RSSV1, RSSV2) are supplied.

6. Antenna diversity radio receiving arrangement according to Claims 2 and 4, **characterized in that** the antenna selection means (AAM) is designed in such a manner that the antenna selection is carried out by the identification/non-identification of a TDMA-specific signal sequence in the radio message.

7. Antenna diversity radio receiving arrangement according to Claim 6, **characterized in that** the TDMA-specific signal sequence is designed as a "1/0" signal sequence.

8. Antenna diversity radio receiving arrangement according to one of Claims 1 to 2 or 4 to 7, **characterized in that** the message block (SYF, NIF, E-SYF) is designed as a DECT-specific message block.

9. Method for selection of antennas in an antenna diversity radio receiving arrangement for telecommunications systems using block-oriented transmission of radio messages, in which
a) during the receiving time periodof a synchronization initiation word (SEW, E-SEW) (which contains redundant data) in a synchronization field (SYF, E-SYF) which is contained in a message block of the radio message and comprises the synchronization initiation word (SEW, E-SEW) and a synchronization confirmation word (SBW, E-SBW), at least two different antennas (A1, A2) are assigned as a receiving antenna to the receiving channel of the antenna diversity radio receiving arrangement (FT, PT),
b) of the antennas (A1, A2) which are assigned to the receiving channel during the receiving time period of the synchronization initiation word (SEW, E-SEW), that antenna having the best receiving characteristic is assigned to the receiving channel for the receiving time periodof the message block,
in which
the antennas (A1, A2) jointly use these antenna diversity means (RE, RE-T, RE-R, DS, RSSI, A/D, M-CT) of the antenna diversity radio receiving arrangement (FT, PT), and the antennas (A1, A2) are alternately assigned to the antenna diversity means (RE, RE-T, RE-R, DS, RSSI, A/D, M-CT).

## Revendications

1. Système radiorécepteur à réception en diversité d'antennes pour systèmes de télécommunications à transmission de messages radio orientés par blocs, dans lequel on prévoit des moyens de réception en diversité d'antennes auxquels sont associées plusieurs antennes (A1, A2) et qui sont exécutés de manière à ce que
a) pendant la durée de réception d'un mot d'initialisation de synchronisation (SEW, E-SEW) contenant des données redondantes d'un champ de synchronisation (SYF, E-SYF) contenu dans un bloc de messages du message radio et formé par le mot d'initialisation de synchronisation (SEW, E-SEW) et un mot de confirmation de synchronisation (SBW, E-SBW), au moins deux antennes différentes (A1, A2) associées aux moyens de réception en diversité d'antennes (RE, RE-T, RE-R, DS, RSSI, A/D, M-CT) soient associées, en tant qu'antenne réceptrice, au canal de réception du système radiorécepteur à réception en diversité d'antennes (FT, PT),
b) parmi les antennes (A1, A2) associées au canal de réception pendant la durée de réception du mot d'initialisation de synchronisation (SEW, E-SEW), l'antenne ayant la meilleure caractéristique de réception soit associée au canal de réception pour la durée de réception du bloc de messages,
les moyens de réception en diversité d'antennes (RE, RE-T, RE-R, DS, RSSI, A/D, M-CT) étant associés aux antennes (A2, A2) de manière à ce que les antennes (A1, A2) utilisent en commun les moyens de réception en diversité d'antennes et que les antennes (A1, A2) soient associées aux moyens de réception en diversité d'antennes de manière alternative.

2. Système radiorécepteur à réception en diversité d'antennes selon la revendication 1, caractérisé en ce que le message radio est formé en tant que message radio AMRT.

3. Système radiorécepteur à réception en diversité d'antennes selon la revendication 1, caractérisé en ce que le message radio est formé en tant que message radio AMDC.

4. Système radiorécepteur à réception en diversité d'antennes selon l'une des revendications 1 à 3, caractérisé en ce que les moyens de réception en diversité d'antennes (RE, RE-T, RE-R, DS, RSSI, A/D, M-CT) contiennent des moyens de sélection d'antenne (AAM) qui sont exécutés de manière à ce que la sélection d'antenne se fasse grâce à des mesures de l'intensité de champ (FSM1, FSM2).

5. Système radiorécepteur à réception en diversité d'antennes selon la revendication 4, caractérisé en ce que les moyens de sélection d'antenne (AAM) comprennent un comparateur (KOM) auquel sont amenées des valeurs de tension (AS1, AS2) correspondant à des valeurs d'intensité de champ (RSSV1, RSSV2) mesurées.

6. Système radiorécepteur à réception en diversité d'antennes selon la revendication 2 et 4, caractérisé en ce que les moyens de sélection d'antenne (AAM) sont exécutés de manière à ce que la sélection d'antenne se fasse grâce à la détection/non détection d'une suite de signaux spécifiques AMRT du message radio.

7. Système radiorécepteur à réception en diversité d'antennes selon la revendication 6, caractérisé en ce que la suite de signaux spécifiques AMRT est formée en tant que suite de signaux "1/0".

8. Système radiorécepteur à réception en diversité d'antennes selon l'une des revendications 1 à 2 ou 4 à 7, caractérisé en ce que le bloc de messages (SYF, NIF, E-SYF) est formé en tant que bloc de messages spécifique DECT.

9. Procédé de sélection d'antennes dans un système radiorécepteur à réception en diversité d'antennes pour systèmes de télécommunications à transmission de messages radio orientés par blocs, avec lequel
a) pendant la durée de réception d'un mot d'initialisation de synchronisation (SEW, E-SEW) contenant des données redondantes d'un champ de synchronisation (SYF, E-SYF) contenu dans un bloc de messages du message radio et formé par le mot d'initialisation de synchronisation (SEW, E-SEW) et un mot de confirmation de synchronisation (SBW, E-SBW), au moins deux antennes différentes (A1, A2) sont associées, en tant qu'antenne réceptrice, au canal de réception du système radiorécepteur à réception en diversité d'antennes (FT, PT),
b) parmi les antennes (A1, A2) associées au canal de réception pendant la durée de réception du mot d'initialisation de synchronisation (SEW, E-SEW), l'antenne ayant la meilleure caractéristique de réception soit associée au canal de réception pour la durée de réception du bloc de messages,
les antennes (A1, A2) utilisant en commun ces moyens de réception en diversité d'antennes (RE, RE-T, RE-R, DS, RSSI, A/D, M-CT) du système radiorécepteur à réception en diversité d'antennes (FT, PT) et les antennes (A1, A2) étant associées aux moyens de réception en diversité d'antennes (RE, RE-T, RE-R, DS, RSSI, A/D, M-CT) de manière alternative.
